# EUROPÄISCHE PATENTSCHRIFT

(11) **EP 3 624 312 B1**
(45) Veröffentlichungstag und Bekanntmachung des Hinweises auf die Patenterteilung: **11.08.2021**
(21) Anmeldenummer: 18193980.2
(22) Anmeldetag: 12.09.2018
(51) Int. Cl.: H02K 5/06, H02K 5/20, H02K 15/14

(54) **VERFAHREN ZUR HERSTELLUNG EINES FLÜSSIGKEITSKÜHLMANTELS**
METHOD FOR THE PRODUCTION OF A LIQUID COOLING MANTLE
PROCÉDÉ DE FABRICATION D'UNE ENVELOPPE DE REFROIDISSEMENT DE FLUIDE

(43) Veröffentlichungstag der Anmeldung: 18.03.2020
(73) Patentinhaber: Siemens Mobility GmbH, 81739 München (DE)
(72) Erfinder: Körner, Olaf, 90469 Nürnberg (DE); Oude Kotte, Freerk Jacobus, 90547 Stein (DE)

(56) Entgegenhaltungen:
- WO-A2-2011/066981
- DE-A1-102016 203 945
- DE-T5-112015 006 496
- JP-A- 2014 108 006
- JP-B2- 2 860 036

## Beschreibung

Die Erfindung betrifft Verfahren zur Herstellung eines Flüssigkeitskühlmantels einer dynamoelektrischen Maschine, einen Stator mit einem derartigen Flüssigkeitskühlmantel als auch eine dynamoelektrische Maschine mit einem derartigen Stator.

Dynamoelektrische Maschinen, insbesondere hochausgenutzte dynamoelektrische Maschinen bedürfen einer ausreichenden Kühlung, um einen ordnungsgemäßen Betrieb zu gewährleisten. Eine oberflächengekühlte Maschine reicht dabei nicht immer aus. Deshalb werden Flüssigkeitskühlmäntel um die Statoren dynamoelektrischer Maschinen angeordnet, um die Verlustwärme effizient abführen zu können. Derartige Flüssigkeitskühlmäntel sind erfahrungsgemäß aufwändig herzustellen. Dabei gibt es Werkstoffe, beispielsweise wie Gusswerkstoff, die nicht schweißbar oder nur sehr schwierig schweißbar sind. Derartige Flüssigkeitskühlmäntel mit anderen Materialien herzustellen, die besser schweißbar sind, sind in ihrer Herstellung jedoch vergleichsweise teuer.

Um Schweißvorgänge bei diesen Flüssigkeitskühlmäntel zu reduzieren wird eine Zweiteiligkeit und koaxiale Anordnung von Gehäuseteilen vorgesehen. Diese Gehäuseteile werden dann mit zusätzlichen O-Ringen abgedichtet, wie dies beispielsweise der DE 10 2004 050 645 B4 zu entnehmen ist.

Aus der japanischen Patentschrift JP 2860036 B2 ist bekannt, beim Gießvorgang eines Stators einer rotierende elektrische Maschine einen Kühlmediumkanal in einer Zickzackform in axialer Richtung der elektrischen Maschine auszubilden. Der für die Ausbildung des Kühlmediumkanal verwendete Gusssand wird über eine Öffnung des Kanals an einem axialen Ende des Stators entfernt und die Öffnung mittels einer Manschette verschlossen.

Ausgehend davon liegt der Erfindung die Aufgabe zugrunde, ein Verfahren zur Herstellung eines Flüssigkeitskühlmantels zu schaffen, das in wirtschaftlicher Art und Weise geeignet ist, einen Flüssigkeitskühlmantel bereitzustellen, um eine effiziente Kühlung eines Stators einer dynamoelektrischen Maschine zu gewährleisten. Dabei sollen unter anderem bereits vorhandene Fertigungsverfahren berücksichtigt werden.

Die Lösung der gestellten Aufgabe gelingt durch ein Verfahren zur Herstellung eines Flüssigkeitskühlmantels eines Stators einer dynamoelektrischen rotatorischen Maschine, insbesondere eines Traktionsantriebs, durch folgende Schritte:
- Bereitstellen eines vorgefertigten Basiselements eines Flüssigkeitskühlmantels aus einem Gusswerkstoff beispielsweise wie GJS (globularer Grauguss) oder Aluminium mit einem ausgebildeten Hohlraum, der zumindest eine Einlassöffnungen, zumindest eine Auslassöffnung und zumindest eine Gussöffnung aufweist,
- Entfernen des Gusssandes aus dem Hohlraum des aus dem Gusswerkstoff gebildeten Basiselements,
- Verschließen der Gussöffnungen mittels eines Cold-Spray-Verfahrens.

Durch das erfindungsgemäße Verfahren zur Herstellung eines Flüssigkeitskühlmantels eines Stators wird nunmehr ein einteiliges und einstückiges Basiselement mit einem ausgebildeten Hohlraum durch einen Gießprozess bereitgestellt. Das Material des Basiselements ist dabei gemäß einer Weiterbildung ein Gusseisen wie globularer Grauguss (GJS) oder Aluminium.

Unter dem Gusseisenwerkstoff wird dabei die Gruppe von Eisen-Kohlenstoff-Legierungen verstanden mit einem vergleichsweise hohen Anteil von Kohlenstoff (> 2%). Es kann sich bei dem Gusseisen um Grauguss handeln, in dem Kohlenstoff in Form von Graphit vorkommt. Je nach dem in welcher Form Graphit vorliegt handelt es sich um globularen Grauguss (GJS; Kugelgraphit), Gusseisen mit Lamellengraphit (GJL; Graphit liegt in Lamellenfrom vor) oder Gusseisen mit Vermiculargraphit (GJV; Graphit liegt als "Klumpen" vor).

Um den Kern für die Ausbildung des Hohlraums des Basiselements beim Gussprozess in der Sandgussform abstützen zu können, ist zumindest eine Gussöffnung innen und/oder außen an dem Gussteil bzw. Basisteil notwendig. Diese Gussöffnungen müssen im Nachhinein geschlossen werden, um einen abgedichteten Hohlraum zu erhalten, der dann einen Kühlkanal des Flüssigkeitskühlmantels bilden soll.

Erfindungsgemäß wird dabei zum Verschließen ein Cold-Spray-Verfahren angewandt, das im Bereich der Öffnung ein Verschlusselement vorsieht. Das Verschlusselement wird mit dem Basiselement durch das Cold-Spray-Verfahren verbunden und damit die Gussöffnung abgedichtet.

Cold-Spray-Verfahren, auch Kaltgasspritzen genannt, ist ein Beschichtungsverfahren, bei dem der Beschichtungswerkstoff in Pulverform mit vergleichsweise hoher Geschwindigkeit auf einen Gegenstand (Subtrat) aufgebracht wird. Dabei wird ein auf wenige hundert Grad aufgeheiztes Prozessgas (Stickstoff oder Helium) durch Expansion in einer Lavaldüse auf Überschallgeschwindigkeit beschleunigt und anschließend die Pulverpartikel in den Gasstrahl injiziert. Die injizierten Spritzpartikel werden dabei auf eine so hohe Geschwindigkeit beschleunigt, dass sie im Gegensatz zu anderen thermischen Spritzverfahren auch ohne vorangehendes An- oder Aufschmelzen beim Aufprall auf das Substrat eine dichte und fest haftende Schicht und damit eine Verbindung oder Abdichtung schaffen. Die kinetische Energie zum Zeitpunkt des Aufpralls reicht aber für ein vollständiges Aufschmelzen der Partikel nicht aus.

Um eine dementsprechende ausreichende Materialanhäufung zwischen Verschlusselement und Gussöffnung des Basiselements zu erhalten, wird erfindungsgemäß eine Nut in dem Bereich vorgesehen. Diese Nut wird dann mittels des Cold-Spray-Verfahrens mit Material "gefüllt", dabei findet ein Verbindungs- und Dichtungsprozess statt. Durch das zusätzliche Verschlusselement kann der Abdichtungsprozess zeitlich beschleunigt werden, da weniger Material durch das Cold-Spray-Verfahren in die Gussöffnung einzubringen ist. Dies ist insbesondere dann der Fall, wenn diese Nut V-förmig, U-förmig oder in anderer Art und Weise querschnittsverengend ausgebildet ist.

In einer anderen Ausführungsform wird das Basiselement mit seinem Hohlraum und der Gussöffnung, die durch das Cold-Spray-Verfahren geschlossen werden soll, folgendermaßen verfahren: In den Hohlraum, insbesondere im Bereich der Gussöffnung wird nach Entfernen des Gusssandes eine aushärtbare aber flüssigkeitslösliche Masse, beispielsweise gepresste oder gesinterte Salzkerne eingebracht. Gegen diese nunmehr bestehende Wand kann nunmehr mittels eines Cold-Spray-Verfahrens das Material angebracht und eingesetzt werden, so dass die Gussöffnung dadurch geschlossen wird. Nachdem die Gussöffnung verschlossen und abgedichtet ist, wird nunmehr die flüssigkeitslösliche Masse aus dem Hohlraum des Flüssigkeitskühlmantels über die Ein- und Auslässe des Flüssigkeitskühlmantels gespült.

Die Erfindung kann anhand folgender nicht erfindungsgemäßen Ausführungsbeispiele näher dargestellt und somit besser verstanden werden. Darin zeigen:
- FIG 1: zwei Grundelemente,
- FIG 2: einen Flüssigkeitskühlmantel,
- FIG 3: zwei weitere Grundelemente,
- FIG 4: einen Flüssigkeitskühlmantel,
- FIG 5: ein einstückiges Basiselement,
- FIG 6: einen Flüssigkeitskühlmantel,
- FIG 7: ein weiteres Basiselement,
- FIG 8: einen Flüssigkeitskühlmantel,
- FIG 9: einen Flüssigkeitskühlmantel an einer dynamoelektrischen Maschine.

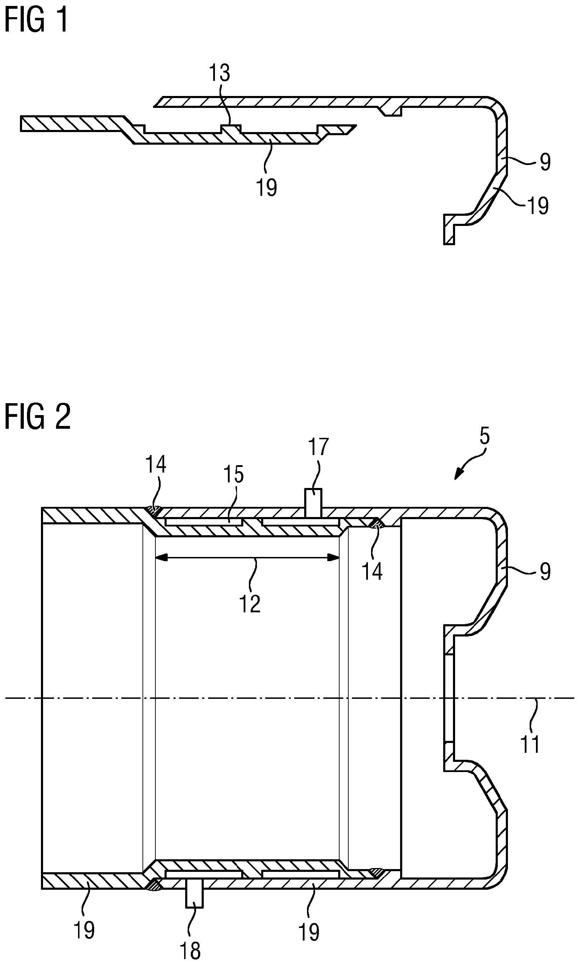

FIG 1 zeigt zwei prinzipiell dargestellte Grundelemente 19, die unterschiedlich ausgeführt sind und zusammengesetzt einen Flüssigkeitskühlmantel 5, einer nicht näher dargestellten dynamoelektrischen Maschine 1 bilden. Das eine Grundelement 19 weist zusätzliche Lagerschilde 9 auf, wobei das andere Grundelement 19 zusätzliche Stege 13 aufweist, die, zusammengesetzt Kühlkanäle 15 eines Flüssigkeitskühlmantels 5 ergeben.

FIG 2 zeigt die Grundelemente 19 der FIG 1, die zusammengesetzt einen Flüssigkeitskühlmantel 5 ergeben, wobei der Trennsteg 13 Kühlkanäle 15 schafft, die durch die beiden Grundelemente 19 aufgrund der Zusammensetzung gebildet werden. Eine Abdichtung und Fixierung der beiden Grundelemente 19 zueinander erfolgt durch ein Cold-Spray-Verfahren. Dabei wird ein geeignetes Cold-Spray-Material 14 an den Stoßstellen der beiden Grundelemente 19 aufgetragen. Damit wird ein leistungsfähiger Flüssigkeitskühlmantel 5 geschaffen, der einen Kontaktbereich 12 aufweist, in den später ein Blechpaket eines Stators 2 eingeschrumpft werden kann. Ebenso ist das Lagerschild 9 zu sehen, dass ein Lager im weiteren Herstellungsprozess der dynamoelektrischen Maschine aufnehmen wird. Dieses Lager nimmt eine Welle 16 eines um eine Achse 11 drehbaren Rotors 3 auf.

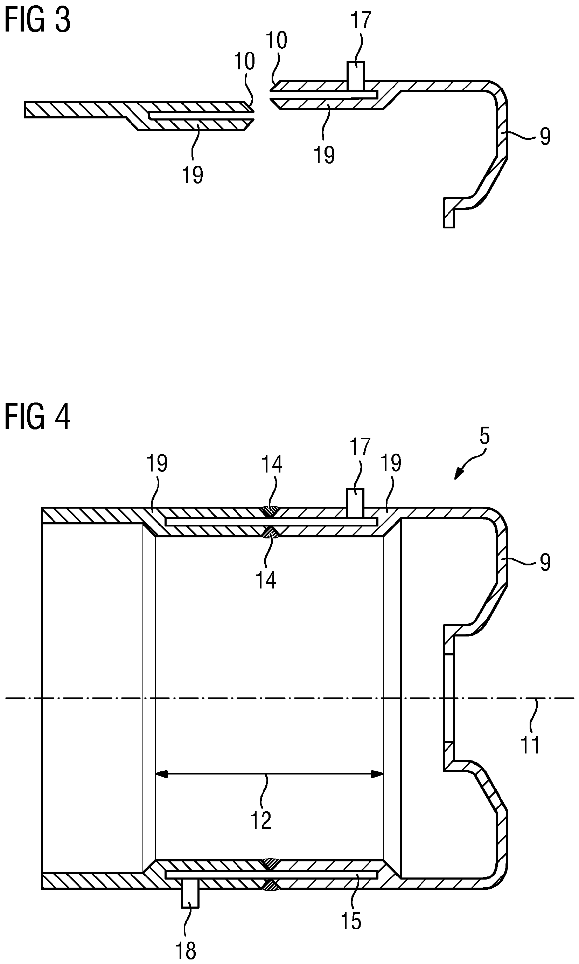

FIG 3 zeigt zwei weitere anders ausgeführte Grundelemente 19, die zusammengesetzt ebenfalls einen Hohlraum schaffen und somit einen Flüssigkeitskühlmantel 5 mit seinem Kühlkanal 15 bilden. Auch hier weist das eine Grundelement 19 Ausgestaltungen auf, die letztlich ein Lagerschild 9 bilden. Das Cold-Spray-Material 14 wird dabei gemäß FIG 4 an den Stoßstellen der beiden Grundelemente 19, die insbesondere V-förmig ausgeführt sind eingetragen. Für den Kontaktbereich 12 ist entscheidend, dass das Cold-Spray-Material 14 auf der Innenseite des Flüssigkeitskühlmantels 5 bündig aufgetragen wird.

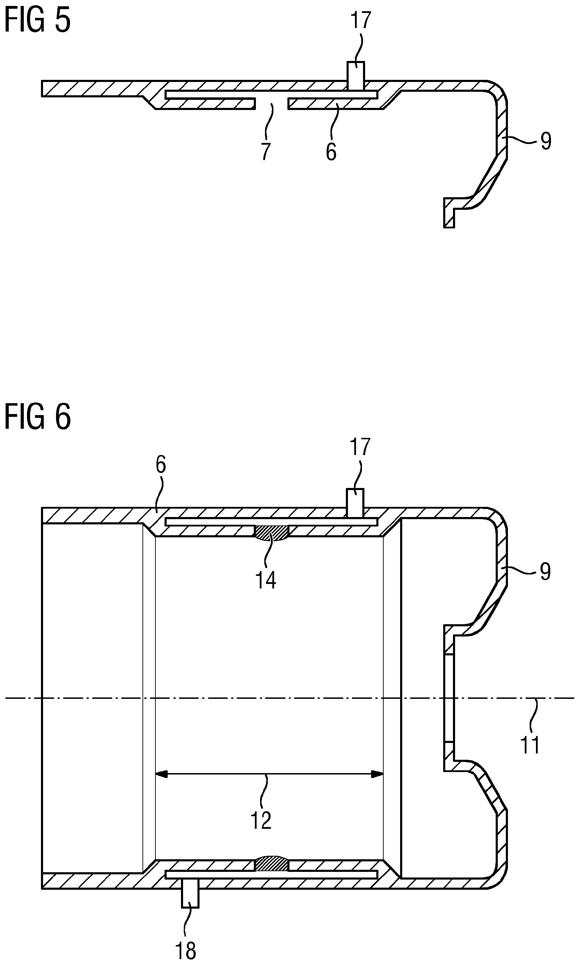

FIG 5 zeigt ein einstückiges Basiselement 6, das ebenfalls ein Lagerschild 9 ausbildet und eine Gussöffnung 7 aufweist, die konstruktionsbedingt verschlossen wird, aber im Herstellungsprozess zunächst notwendig ist, um den Kern des Gusses abzustützen. Der Verschluss dieser Gussöffnung 7 gelingt durch einen Cold-Spray-Materialeintrag 14 oder durch ein nicht näher dargestellten Verschlusselement, das in der Gussöffnung 7 vorgesehen wird und das mittels des Cold-Spray-Verfahrens mit dem einstückigen Basiselement 6 verbunden wird. Die Gussöffnung 7 ist gemäß FIG 5 nach innen gerichtet.

Für den Kontaktbereich 12 ist entscheidend, dass das Cold-Spray-Material 14 und/oder das Verschlusselement auf der Innenseite des Flüssigkeitskühlmantels 5 bündig angeordnet wird, um einen funktionsfähigen Schrumpfsitz des Flüssigkeitskühlmantels 5 auf dem Stator 2 zu erhalten.

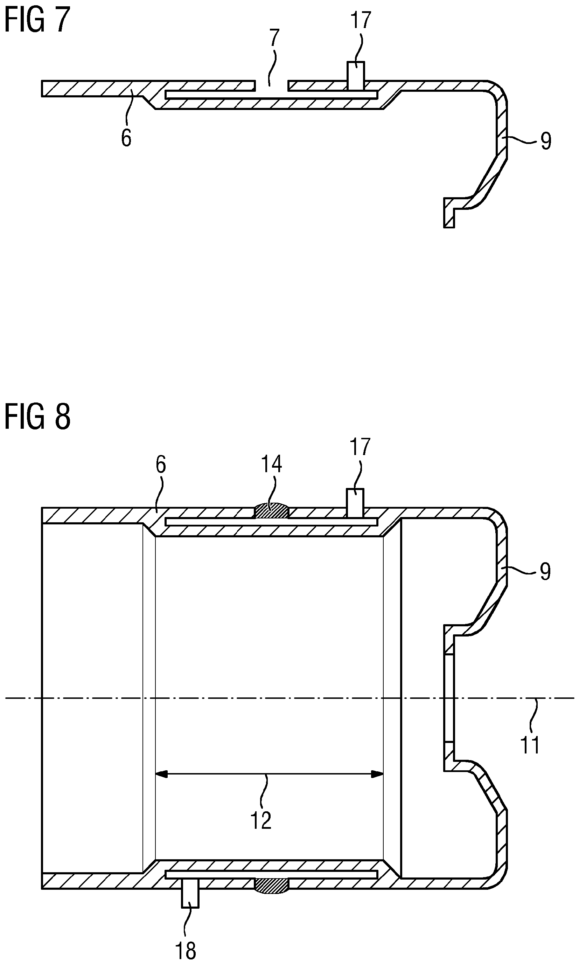

FIG 7 zeigt eine Gussöffnung 7 eines einstückigen Basiselements 6, die nach außen gerichtet ist und dort ebenfalls mittels eines Verschlusselements oder durch einen Cold-Spray-Materialeintrag 14 verschlossen wird. Damit liegen nach FIG 6 und FIG 8 Flüssigkeitskühlmäntel 5 vor, die jeweils nur einen in Umfangsrichtung betrachtet umlaufenden Cold-Spray-Materialeintrag 14 aufweisen.

Unabhängig von der Zusammensetzung des Flüssigkeitskühlmantels 5, d.h. aus einem einstückigen Basiselement 6 oder zwei- oder mehrteiligen Grundelementen 19, wird ein Stator 2 in den Flüssigkeitskühlmantel 5 eingeschrumpft. Somit kommt in dem Kontaktbereich 12 das elektromagnetisch-leitfähige Material des Stators, insbesondere ein Statorblechpaket zum Anliegen, derart dass sich ein vergleichseise guter Wärmeübergang vom Blechpaket des Stators 2 zum Flüssigkeitskühlmantel 5 einstellt.

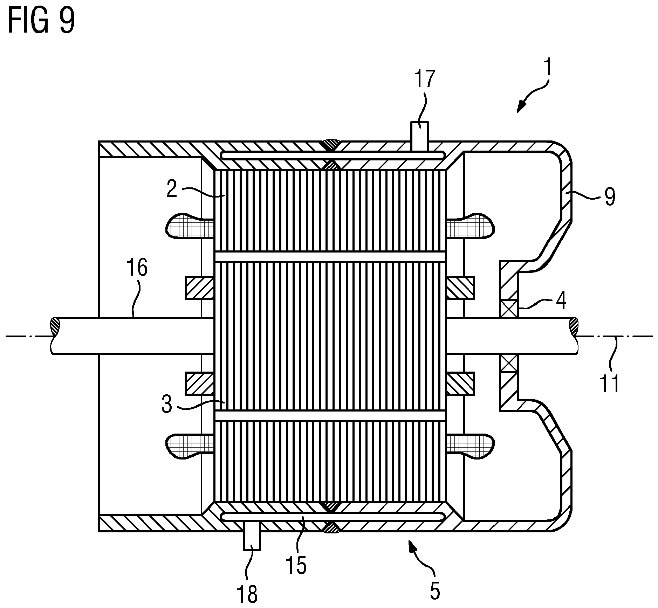

FIG 9 zeigt eine dynamoelektrische Maschine 1 mit einem Flüssigkeitskühlmantel 5. Über eine Einlassöffnung 17 wird ein Kühlmittel in den Hohlraum bzw. den Kühlkanal 15 eingespeist und über eine Auslassöffnung 18 entnommen. Der Hohlraum kann dabei durch dementsprechende Elemente, wie Stege derart ausgebildet sein, dass sich ein vorgegebener Kühlmittelverlauf innerhalb des Hohlraumes 15 von der Einlassöffnung 17 zur Auslassöffnung 18 einstellt. Dies kann z.B. ein mäandernder Verlauf innerhalb des Hohlraumes 15 oder ein spiralförmiger Verlauf um die Achse 11 sein.

Die Einlassöffnungen 17 und Auslassöffnungen 18 sind dabei entweder bereits an einem Basiselement 6 oder Grundelement 19 vorgesehen oder werden nachträglich an den Flüssigkeitskühlmantel 5 angebracht.

Der Kühlkreislauf kann dabei auch in ein Kühlkonzept eines Antriebs eines Schienenfahrzeugs, Mining-Trucks oder andere Elektrofahrzeuge eingebunden sein, indem beispielsweise die Wärme über Wärmetauscher zu Heizzwecken innerhalb des Fahrzeuges verwendet wird.

## Patentansprüche

1. Verfahren zur Herstellung eines Flüssigkeitskühlmantels (5) eines Stators (2) einer dynamoelektrischen rotatorischen Maschine (1), insbesondere eines Traktionsantriebs, durch folgende Schritte:
- Bereitstellen eines vorgefertigten Basiselements (6) eines Flüssigkeitskühlmantels (5) aus einem Gusswerkstoff mit einem ausgebildeten Hohlraum (15), der zumindest eine Einlassöffnung (17), zumindest eine Auslassöffnung (18) und zumindest eine Gussöffnung (7) aufweist,
- Entfernen des Gusssandes aus dem Hohlraum (15) des aus dem Gusswerkstoff gebildeten Basiselements (6), **gekennzeichnet durch** den weiteren Schritt:
- Verschließen der Gussöffnungen (7) mittels eines Cold-Spray-Verfahrens, wobei die Gussöffnung (7) mittels eines Verschlusselements geschlossen wird, in dem mittels des Cold-Spray-Verfahrens das Verschlusselement mit dem Basiselement (6) verbunden und damit die Gussöffnung (7) abgedichtet wird, und wobei das Verschlusselement und die Gussöffnung (7) jeweils eine Nut aufweisen, in welche das Material mittels des Cold-Spray-Verfahren eingebracht wird.

2. Verfahren nach Anspruch 1, **dadurch gekennzeichnet, dass** vorgefertigte Basiselement (6) aus GJS (globularer Grauguss) oder Aluminium als Gusswerkstoff bereitgestellt wird.

3. Verfahren nach Anspruch 1 oder 2, **dadurch gek enn-zeichnet**, dass das Verschlusselement und die Gussöffnung (7) jeweils eine V-Nut (10) aufweisen, in welche das Material mittels des Cold-Spray-Verfahren eingebracht wird.

4. Verfahren nach Anspruch 1, **dadurch gekennzeichnet, dass** nach Entfernen des Gusssandes in den ausgebildeten Hohlraum (15) eine aushärtende flüssigkeitslösliche Masse eingebracht wird, gegen die das Cold-Spray-Verfahren sprüht und die Gussöffnung (7) schließt.

5. Verfahren nach Anspruch 4, **dadurch gekennzeichnet, dass** nach Abschluss des Cold-Spray-Verfahrens die flüssigkeitslösliche Masse aus dem Hohlraum (15) des Basiselements (6) über die Einlassöffnung (17) und/oder Auslassöffnung (18) gespült wird.

## Claims

1. Method for producing a liquid cooling jacket (5) of a stator (2) of a dynamoelectric rotary machine (1), in particular a traction drive, by way of the following steps:
- providing a prefabricated base element (6) of a liquid cooling jacket (5) made of a cast material with a shaped cavity (15), which has at least one inlet opening (17), at least one outlet opening (18) and at least one casting opening (7),
- removing the casting sand from the cavity (15) of the base element (6) formed of the cast material, **characterised by** the further step:
- closing off the casting openings (7) by means of a cold spraying method, wherein the casting opening (7) is closed by means of a closure element, in which the cold spraying method is used to connect the closure element to the base element (6) and thus to seal off the casting opening (7), and wherein the closure element and the casting opening (7) each have a slot, into which the material is introduced by means of the cold spraying method.

2. Method according to claim 1, **characterised in that** the prefabricated base element (6) is provided as being made of SGCI (spheroidal graphite cast iron) or aluminium as casting material.

3. Method according to claim 1 or 2, **characterised in that** the closure element and the casting opening (7) each have a V slot (10), into which the material is introduced by means of the cold spraying method.

4. Method according to claim 1, **characterised in that**, after removing the casting sand, a hardening liquid-soluble mass is introduced into the shaped cavity (15), against which the cold spraying method sprays and closes the casting opening (7).

5. Method according to claim 4, **characterised in that**, once the cold spraying method has concluded, the liquid-soluble mass is flushed from the cavity (15) of the base element (6) via the inlet opening (17) and/or outlet opening (18).

## Revendications

1. Procédé de production d'une enveloppe (5) de refroidissement par du liquide d'un stator (2) d'une machine (1) tournante dynamo-électrique, notamment d'un entraînement de traction, par les stades suivants :
- on se procure un élément (6) de base préfabriqué d'une enveloppe (5) de refroidissement par du liquide en un matériau de coulée ayant une cavité (15) constituée, qui a au moins une ouverture (17) d'entrée, au moins une ouverture (18) de sortie et au moins une ouverture (7) de coulée,
- on élimine le sable de coulée de la cavité (15) de l'élément (6) de base formé en le matériau de coulée, **caractérisé par** le stade supplémentaire :
- on ferme les ouvertures (7) de coulée au moyen d'un procédé cold-spray, dans lequel on ferme l'ouverture (7) de coulée au moyen d'un élément de fermeture, dans lequel, au moyen du procédé cold-spray, l'élément de fermeture, on relie l'élément de fermeture à l'élément (6) de base et on rend ainsi étanche l'ouverture (7) de coulée et dans lequel l'élément de fermeture et l'ouverture (7) de coulée ont chacun une rainure, dans laquelle le matériau est introduit au moyen du procédé cold-spray.

2. Procédé suivant la revendication 1, **caractérisé en ce que** l'on se procure un élément (6) de base préfabriqué en GJS (fonte grise globulaire) ou en aluminium comme matériau de coulée.

3. Procédé suivant la revendication 1 ou 2, **caractérisé en ce que** l'élément de fermeture et l'ouverture (7) de coulée ont chacun une rainure (10) en V, dans laquelle on introduit le matériau au moyen du procédé cold-spray.

4. Procédé suivant la revendication 1, **caractérisé en ce qu'**après l'élimination du sable de coulée dans la cavité (15) constituée, on introduit une masse durcissable soluble dans du liquide, sur laquelle on pulvérise le cold-spray et on ferme l'ouverture (7) de coulée.

5. Procédé suivant la revendication 4, **caractérisé en ce qu'**après la fin du procédé cold-spray, on fait sortir la masse soluble dans du liquide de la cavité (15) de l'élément (6) de base par l'ouverture (17) d'entrée et/ou par l'ouverture (18) de sortie.
